# EUROPEAN PATENT APPLICATION

(11) **EP 4 439 920 A2**
(43) Date of publication of application: **02.10.2024**
(21) Application number: 24166362.4
(22) Date of filing: 26.03.2024
(51) Int. Cl.: H02J 7/00

(54) **BATTERY PACK**

(30) Priority: 27.03.2023 KR 20230040012; 06.10.2023 KR 20230133688
(71) Applicant: Samsung SDI Co., Ltd., Yongin-si, Gyeonggi-do 17084 (KR)
(72) Inventor: JEON, Peelsik, Yongin-si 17084 (KR)
(74) Representative: Marks & Clerk LLP

(57) **Abstract**

A battery pack includes: first and second pack terminals; a battery having battery cells; a first switch and a precharging resistor connected to each other in series between the battery and the first pack terminal; a second switch connected between the battery and the second pack terminal; and a protection circuit configured to open at least one of the first switch or the second switch based on a discharging current flowing through the precharging resistor being maintained to be greater than a second reference value for more than a reference time from a point in time based on the discharging current being greater than a first reference value.

## Description

### BACKGROUND

### 1. Field

Aspects of one or more embodiments relate to a battery pack that may prevent damage due to an excessive inrush current caused by an electrical short.

### 2. Description of the Related Art

In the event of an electrical short in an electrical load or charger connected to a battery pack, an excessive current may be discharged from a battery pack, which may result in damage to the battery pack. In order to prevent or reduce the damage, the battery pack may detect an overcurrent by using a current sensor and perform a protection operation by opening a charging-discharging switch if the overcurrent is detected.

The above information disclosed in this Background section is only for enhancement of understanding of the background and therefore the information discussed in this Background section does not necessarily constitute prior art.

### SUMMARY

Aspects of one or more embodiments relate to a battery pack that may prevent or reduce damage due to an excessive inrush current caused by an electrical short.

Aspects of one or more embodiments include a battery pack including a protection circuit that may detect an electrical short through a precharging resistor and directly open a charging-discharging switch if pack terminals of the battery pack are connected to an electric load or charger where an electrical short occurs.

Additional aspects will be set forth in part in the description which follows and, in part, will be apparent from the description, or may be learned by practice of the presented embodiments of the present disclosure.

According to one or more embodiments, a battery pack includes first and second pack terminals, a battery having battery cells, a first switch and a precharging resistor connected to each other in series between the battery and the first pack terminal, a second switch connected between the battery and the second pack terminal, and a protection circuit configured to open at least one of the first switch or the second switch if a discharging current flowing through the precharging resistor is maintained to be greater than a second reference value for more than a reference time from a point in time based on or from when the discharging current being greater than a first reference value.

According to some embodiments, the protection circuit may be further configured to include first and second nodes having the precharging resistor therebetween, first, second, and third resistors connected in series to the first node, a first switching switch connected in series between the first, second, and third resistors, a comparator configured to turn the first switching switch on if a voltage across the precharging resistor is greater than a voltage across the first resistor, a delay capacitor connected in parallel to the third resistor, and a second switching switch controlled based on a voltage across the third resistor.

According to some embodiments, the comparator may have a positive input terminal and a negative input terminal, the first resistor may be connected between the first node and the positive input terminal, and the negative input terminal may be connected to the second node.

According to some embodiments, the first reference value may be determined in proportion to a reciprocal number of a sum of a resistance value of the first resistor, a resistance value of the second resistor, and a turn-on resistance value of the first switching switch The second reference value may be determined based on the resistance value of the first resistor, the resistance value of the second resistor, a threshold voltage of the second switching switch, and the turn-on resistance value of the first switching switch.

According to some embodiments, the reference time may be determined based on a resistance value of the third resistor, capacitance of the delay capacitor, and the threshold voltage of the second switching switch. The second switching switch may be turned on if the voltage across the third resistor is greater than the threshold voltage.

According to some embodiments, at least one of the first switch or the second switch may be configured to be opened if the second switching switch is turned on.

According to some embodiments, at least one of the first switch or the second switch may be a relay switch that is closed if an operation voltage is applied thereto. The battery pack may further include a switch control circuit including a control switch configured to transmit the operation voltage to the relay switch. If the second switching switch is turned on, the control switch may be turned off.

At least some of the above and other features of the invention are set out in the claims.

### BRIEF DESCRIPTION OF THE DRAWINGS

The above and other aspects, features, and characteristics of certain embodiments of the present disclosure will be more apparent from the following description taken in conjunction with the accompanying drawings, in which:
FIG. 1 schematically illustrates aspects of an example battery pack;
FIG. 2 illustrates a schematic diagram of a battery pack according to some embodiments of the present disclosure; and
FIG. 3 illustrates a battery pack according to some embodiments of the present disclosure.

### DETAILED DESCRIPTION

Reference will now be made in more detail to aspects of some embodiments, examples of which are illustrated in the accompanying drawings, wherein like reference numerals refer to like elements throughout. In this regard, embodiments according to the present disclosure may have different forms and should not be construed as being limited to the descriptions set forth herein. Accordingly, aspects of some embodiments are merely described below, by referring to the figures, to explain aspects of the present description. As used herein, the term "and/or" includes any and all combinations of one or more of the associated listed items. Expressions such as "at least one of," if preceding a list of elements, modify the entire list of elements and do not modify the individual elements of the list.

Hereinafter, aspects of some embodiments are described in more detail with reference to the accompanying drawings. The present disclosure may be embodied in various forms and are not limited to the embodiments described herein. The embodiments are intended to complete the present disclosure and are provided to provide detailed embodiments to those skilled in the art.

Terms used herein are only used to describe certain embodiments and are not intended to limit the present disclosure. Singular expressions include plural expressions unless the context clearly states otherwise. In the present disclosure, terms, such as "comprise", "include", or "have" are intended to designate the presence of features, numbers, steps, operations, components, units, portions, or combinations thereof described in the present disclosure, and it should be understood that the present disclosure does not exclude in advance the presence or addition of one or more other features, numbers, steps, operations, components, units, portions, or combinations thereof. Terms, such as first, second, and so on may be used to describe various components, but the components should not be limited by the terms. The above terms are used only for the purpose of distinguishing one component from another.

Aspects of some embodiments are more completely described with reference to the accompanying drawings in which the embodiments are illustrated. Identical reference numbers refer to identical components throughout the present disclosure. In the drawings, identical or corresponding components are given the same reference numbers and are not described repeatedly.

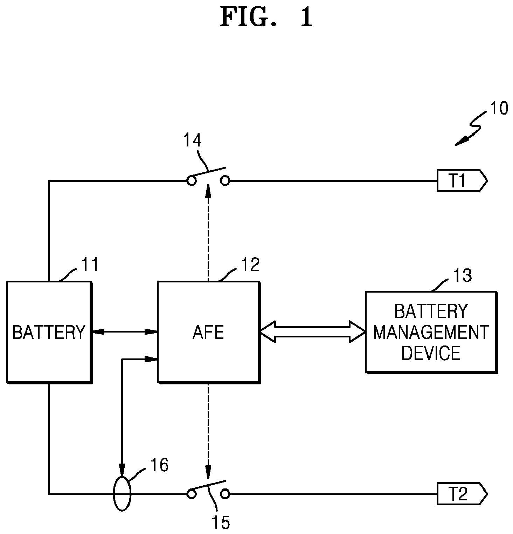

FIG. 1 illustrates aspects of an example battery pack.

Referring to FIG. 1, a battery pack 10 includes a battery 11 connected between pack terminals T1 and T2, an analog front end (AFE) 12, a battery management device 13, a first charging-discharging switch 14, a second charging-discharging switch 15, and a current sensor 16.

The battery 11 includes at least one battery cell. The AFE 12 collects a cell voltage and a temperature of the battery 11. The AFE 12 detects a charging current and a discharging current of the battery pack 10 by using the current sensor 16. The AFE 12 provides battery data including the cell voltage, the temperature, the charging current, and the discharging current to the battery management device 13. The battery management device 13 compares the battery data with a preset reference value and determines whether an abnormal state, such as overcharging, overdischarging, a high temperature, or an overcurrent, occurs. If it is determined that the abnormal state occurs in the battery 11, the battery management device 130 transmits a control command to open the first and second charging-discharging switches 14 and 15 to the AFE 12. The AFE 12 receives the control command from the battery management device 13 and may cause the first and second charging-discharging switches 14 and 15 to be opened according to the control command.

The example battery pack 10 takes a considerable amount of time to perform a protection operation. If the pack terminals T1 and T2 are directly connected to each other and an electrical short occurs, a very large discharging current may be generated from the battery 11. The battery pack 10 may be damaged by a very large discharging current before the battery management device 13 detects an overcurrent and performs a protection operation through the AFE 12.

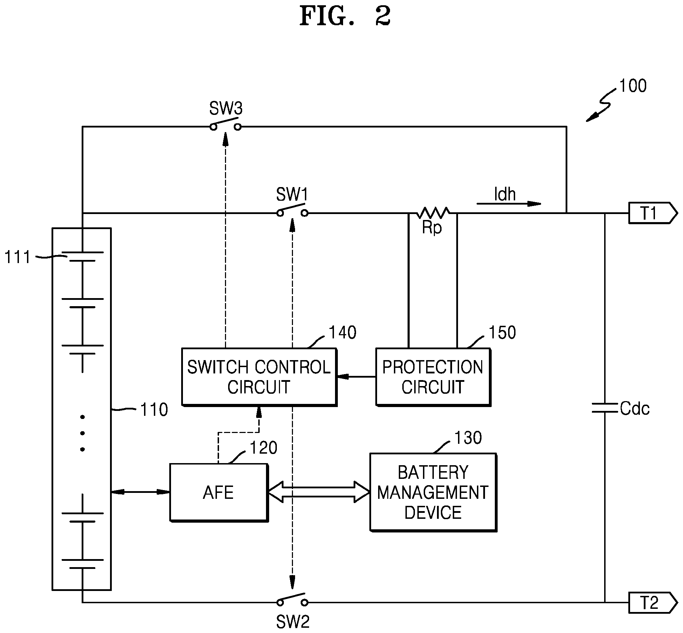

FIG. 2 illustrates a schematic diagram of a battery pack according to some embodiments of the present disclosure.

Referring to FIG. 2, a battery pack 100 includes a battery 110 connected between a first pack terminal T1 and a second pack terminal T2, a first switch SW1 and a precharging resistor Rp connected to each other in series between the battery 110 and the first pack terminal T1, a second switch SW2 connected between the battery 110 and the second pack terminal T2, and a protection circuit 150. The protection circuit 150 is configured to open at least one of the first switch SW1 or the second switch SW2 if a discharging current Idh flowing through the precharging resistor Rp is maintained to be greater than a second reference value for more than a reference time from a point in time based on, i.e. from when the discharging current Idh is greater than a first reference value.

The battery 110 includes battery cells 111. The battery cells 111 store electric power and may be rechargeable secondary batteries. For example, the battery cells 111 may each include at least one selected from a group including a lithium ion battery, a lithium polymer battery, a nickel cadmium battery, a nickel metal hydride battery (Ni-MH), a nickel-zinc battery (Ni-Zn), a lead battery, and so on.

The number and connection configuration of the battery cells 111 may be determined according to an output voltage and a power storage capacity required for the battery pack 100.

The battery pack 100 may further include an analog front end AFE 120 that monitors the battery 110, and a battery management device 130 that manages the battery pack 100. The battery pack 100 may further include a third switch SW3 connected between the battery 110 and the first pack terminal T1. The battery pack 100 may further include a switch control circuit 140 for controlling the first, second, and third switches SW1, SW2, and SW3.

The AFE 120 may control the first, second, and third switches SW1, SW2, and SW3 through the switch control circuit 140. The AFE 120 may monitor cell voltages and temperatures of the battery cells 111 in the battery 110. The AFE 120 may monitor charging and discharging currents of the battery 110, and for this purpose, the battery pack 100 may further include a current sensor.

The AFE 120 may perform data communication with the battery management device 130. The AFE 120 may transmit status data of the battery 110 obtained by monitoring the battery 110 to the battery management device 130. The AFE 120 may perform cell balancing to equalize the cell voltages of the battery cells 111 in the battery 110. The AFE 120 may include one (or more) AFE integrated circuit (AFE IC).

The battery management device 130 may collect state information of the battery 110 from the AFE 120 and perform a protection operation appropriate for a state of the battery 110. The battery management device 130 may include a micro control unit (MCU).

The battery management device 130 may compare the battery data with a preset reference value to determine whether or not an abnormal state, such as overcharging, overdischarging, a high temperature, or an overcurrent occurs. For example, if the cell voltage of the battery cell 111 is out of a range (e.g., a set or predetermined or preset range), the battery management device 130 may determine the battery cell 111 is in an overvoltage state or an overdischarging state.

The battery management device 130 may adjust a charging and discharging limit current according to the temperature of the battery cell 111. The battery management device 130 may determine that an overcurrent is generated based on, or in response to, the charging and discharging current of the battery 110 exceeding a preset overcurrent reference value, and open at least one of the second or third switches SW2 or SW3.

The battery pack 100 may further include a direct current (DC) link capacitor Cdc connected between the first pack terminal T1 and the second pack terminal T2. The DC link capacitor Cdc may stabilize a pack voltage between the first pack terminal T1 and the second pack terminal T2 and reduce external noise.

If the battery pack 100 is not used, the first, second, and third switches SW1, SW2, and SW3 are all opened. In this case, at least one of the battery management device 130 or the AFE 120 may be in a shutdown state. If the battery pack 100 is connected to an electric load or charger to be used, the battery management device 130 and the AFE 120 may wake up and sequentially close the second switch SW2 and the first switch SW1.

If the first and second switches SW1 and SW2 are closed, the battery 110 may charge the DC link capacitor Cdc, and in this case, a large inrush current may flow. A magnitude of the inrush current is limited by the precharging resistance Rp. An output capacitor may also be mounted on an electric load or charger, and the battery 110 may also charge the output capacitor of the electric load or charger. A fairly large peak current may flow for a short period of time before the output capacitor is charged.

After the DC link capacitor Cdc or the output capacitor is charged, the third switch SW3 is closed, and the first switch SW1 is opened. The first to third switches SW1, SW2, and SW3 may be controlled by the AFE 120 and the switch control circuit 140 according to the control of the battery management device 130.

If an electric load or charger in which an electrical short occurs is connected between the first pack terminal T1 and the second pack terminal T2, the first pack terminal T1 is substantially directly connected to the second pack terminal T2. In this case, if the first and second switches SW1 and SW2 are closed, the large discharging current Idh flows through the precharging resistor Rp. A peak current value of the discharging current Idh may be similar to a large inrush current for charging the DC link capacitor Cdc. Therefore, it is not possible to distinguish between the discharging current Idh if an electrical short occurs and the inrush current for charging the DC link capacitor Cdc only with the peak value of the discharging current Idh. The inrush current for charging the DC link capacitor Cdc flows for a short time and does not damage the battery 110, while the discharging current Idh if an electrical short occurs flows for a relatively long time and may damage the battery 110.

The protection circuit 150 determines whether or not an electrical short occurs based on the discharging current Idh flowing through the precharging resistor Rp, and if it is determined that the electrical short occurs, at least one of the first switch SW1 or the second switch SW2 may be opened. According to some embodiments, the protection circuit 150 starts an operation if the discharging current Idh flowing through the precharging resistor Rp is greater than a first reference value. The protection circuit 150 may open at least one of the first switch SW1 or the second switch SW2 if the discharging current (Idh) is maintained to be greater than a second reference value for more than a reference time after starting the operation.

The second reference value may be lower than the first reference value. Therefore, the protection circuit 150 may perform a protection operation if the discharging current Idh is greater than the second reference value even if the discharging current Idh is reduced to be lower than the first reference value in a state of being higher than the first reference value.

The protection circuit 150 is composed of an electric circuit including electric components. The protection circuit 150 does not detect the discharging current Idh by using a current sensor. The protection circuit 150 directly performs an operation of protecting the battery 110 from an electrical short based on the discharging current Idh flowing through the precharging resistor Rp, and accordingly, the protection operation may be performed quickly.

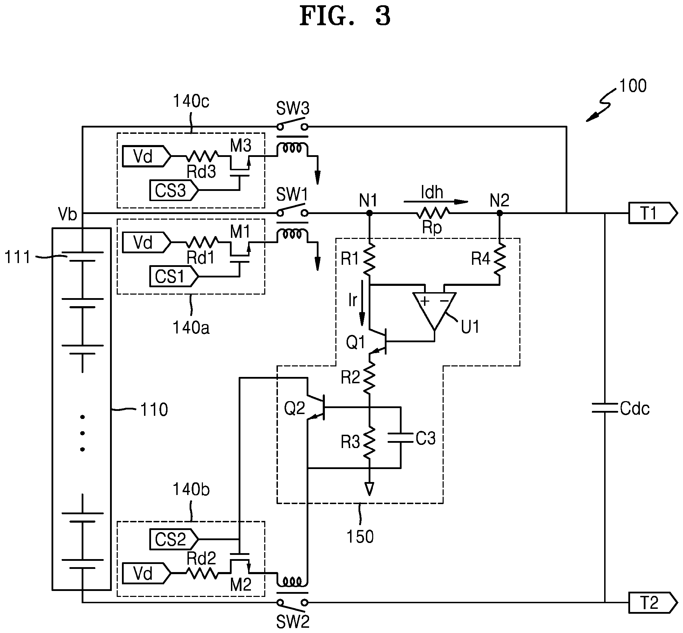

A circuit diagram of the protection circuit 150 is described in more detail below with reference to FIG. 3.

FIG. 3 illustrates a battery pack according to some embodiments of the present disclosure.

Referring to FIG. 3, the battery pack 100 having the first pack terminal T1 and the second pack terminal T2 includes the battery 110 having the battery cells 111, a first switch SW1 and the precharging resistor Rp connected to each other in series between the battery 110 and the first pack terminal T1, a second switch SW2 connected between the battery 110 and the second pack terminal T2, and the protection circuit 150 configured to open at least one of the first switch SW1 or the second switch SW2 if the discharging current Idh flowing through the precharging resistor Rp is maintained to be greater than a second reference value for more than a reference time from a point in time based on or from when the discharging current Idh is greater than a first reference value. The battery 110 has a battery voltage Vb.

In FIG. 3, the protection circuit 150 is configured to open the second switch SW2 but may be configured to open the first switch SW1, or both the first switch SW1 and the second switch SW2.

Although FIG. 3 illustrates that the first pack terminal T1 is a positive terminal and the second pack terminal T2 is a negative terminal, this is only an example, and the first pack terminal T1 may be a negative terminal, and the second pack terminal T2 may be a positive terminal. For example, the first switch SW1 and the precharging resistor Rp may be connected to a negative electrode of the battery 110.

The first, second, and third switches SW1, SW2, and SW3 may be relay switches that are closed if an operation voltage Vd is applied. The battery pack 100 may include first, second, and third switch control circuits 140a, 140b, and 140c for respectively controlling the first, second, and third switches SW1, SW2, and SW3.

The first switch control circuit 140a includes a first control switch M1 that transfers the operation voltage Vd to the first switch SW1 according to a first control signal CS1. If the first control switch M1 is turned on according to the first control signal CS1, the operation voltage Vd received through a resistor Rd1 is supplied to the first switch SW1, and accordingly, the first switch SW1 is closed.

The second switch control circuit 140b includes a second control switch M2 that transfers the operation voltage Vd to the second switch SW2 according to a second control signal CS2. If the second control switch M2 is turned on according to the second control signal CS2, the operation voltage Vd received through a resistor Rd2 is supplied to the second switch SW2, and accordingly, the second switch SW2 is closed. The second control switch M2 is connected to the protection circuit 150, and if a turn-off voltage is applied from the protection circuit 150 to a control terminal of the second control switch M2, the second control switch M2 is turned off, and the second switch SW2 is opened.

The third switch control circuit 140c includes a third control switch M3 that transfers the operation voltage Vd to the third switch SW3 according to a third control signal CS3. If the third control switch M3 is turned on according to the third control signal CS3, the operation voltage Vd received through a resistor Rd3 is supplied to the third switch SW3, and accordingly, the third switch SW3 is closed.

The first, second, and third control signals CS1, CS2, and CS3 may be supplied from the AFE 120 of FIG. 2. According to some embodiments, the first, second, and third control signals CS1, CS2, and CS3 may also be directly supplied from the battery management device 130 of FIG. 2.

The precharging resistor Rp is directly connected between a first node N1 and a second node N2. The first node N1 is between the precharging resistor Rp and the battery 110, and the second node N2 is between the precharging resistor Rp and the first pack terminal T1.

According to some embodiments, if the first pack terminal T1 is a negative terminal, the first node N1 is a node between the precharging resistor Rp and the first pack terminal T1, and the second node N2 may be a node between the precharging resistor Rp and the battery 110. If the first switch SW1 is closed, a voltage of the first node N1 is equal to the battery voltage Vb.

The protection circuit 150 includes first, second, and third resistors R1, R2, and R3 connected in series to the first node N1. The first, second, and third resistors R1, R2, and R3 may be sequentially connected to each other in series between the first node N1 and the ground. The first, second, and third resistors R1, R2, and R3 may be sequentially connected to each other in series between the first node N1 and the second pack terminal T2.

The protection circuit 150 may further include a comparator U1 having a positive input terminal + and a negative input terminal -. The positive input terminal (+) is connected to the first node N1 through the first resistor R1, and the negative input terminal (-) is connected to the second node N2 through the fourth resistor R4. The comparator U1 may compare a voltage across a precharging resistor Rp with a voltage across the first resistor R1.

The protection circuit 150 may further include a first switching switch Q1 connected in series between the first, second, and third resistors R1, R2, and R3. The first switching switch Q1 may be connected between the first resistor R1 and the second resistor R2. The first switching switch Q1 may be connected between the second resistor R2 and the third resistor R3. The first switching switch Q1 may be controlled by the comparator U1.

The comparator U1 may turn on the first switching switch Q1 if the voltage across the precharging resistor Rp is greater than a voltage across the first resistor R1. The voltage across the precharging resistor Rp is equal to the product of a resistance value of the precharging resistor Rp and the discharging current Idh, and the voltage across the first resistor R1 is equal to the product of the resistance value and the reference current Ir flowing through the first resistor R1. The comparator U1 turns on the first switching switch Q1 if Rp×Idh > R1×Ir, that is, if Idh > (R1/Rp)×Ir. A first reference value and a second reference value are determined by (R1 / Rp) x Ir.

The protection circuit 150 may further include a delay capacitor C3 connected in parallel with the third resistor R3, and a second switching switch Q2 controlled based on a voltage across the third resistor R3. The second switching switch Q2 is turned on if the voltage across the third resistor R3 is greater than a threshold voltage. If the reference current Ir does not flow, electric charges stored in the delay capacitor C3 are discharged through the third resistor R3, and accordingly, the voltage across the third resistor R3 converges to 0.

If the first switch SW1 and the second switch SW2 are closed, the discharging current Idh flows through the precharging resistor Rp. If the first switching switch Q1 is turned off, the reference current Ir does not flow, and accordingly, the voltage across the precharging resistor Rp is greater than the voltage across the first resistor R1, and the comparator U1 turns on the first switching switch Q1.

If the first switching switch Q1 is turned on, the voltage across the third resistor R3 is 0, and accordingly, the reference current Ir is equal to a value obtained by dividing the voltage Vb of the first node N1 by a resistance value of the first resistor R1, a resistance value of the second resistor R2, and a turn-on resistance value Rq1 of the first switching switch Q1, that is, Vb/(R1+R2+Rq1). The first reference value is determined by (R1/Rp)×Vb/(R1+R2+Rq1). The first reference value is then determined in proportion to a reciprocal number of the sum of the resistance value of the first resistor R1, the resistance value of the second resistor R2, and the turn-on resistance value Rq1 of the first switching switch Q1.

As the reference current Ir flows, the delay capacitor C3 is charged, and the voltage across the third resistor R3 gradually increases. The time taken for the voltage across the third resistor R3 to reach a threshold voltage Vth of the second switching switch Q2 is referred to as a reference time. As capacitance of the delay capacitor C3 increases, the reference time increases. The reference time is determined based on the resistance value of the third resistor R3, the capacitance of the delay capacitor C3, and the threshold voltage Vth of the second switching switch Q2.

If the voltage across the third resistor R3 reaches the threshold voltage Vth of the second switching switch Q2, the reference current Ir is (Vb-Vth)/(R1 +R2+Rq1). Therefore, the second reference value is (R1/Rp)×(Vb-Vth)/(R1+R2+Rq1) and may be determined based on the resistance value of the first resistor R1, the resistance value of the second resistor R2, the threshold voltage Vth of the second switching switch Q2, and the turn-on resistance value Rq1 of the first switching switch Q1.

The comparator U1 of the protection circuit 150 turns the first switching switch Q1 on if the discharging current Idh flowing through the precharging resistor Rp is greater than the first reference value, and accordingly, the first switching switch Q1 is turned on and the reference current Ir flows therethrough. If the reference current Ir charges the delay capacitor C3 and the voltage across the third resistor R3 is greater than the threshold voltage Vth of the second switching switch Q2, that is, if the discharging current Idh is maintained to be greater than the second reference value for more than the reference time, the second switching switch Q2 is turned on.

If the second switching switch Q2 is turned on, the second control switch M2 is turned off, and if the second control switch M2 is turned off, the second switch SW2 is opened. The second switching switch Q2 may be connected between a source and a gate of the second control switch M2. If the second switching switch Q2 is turned on, the source and the gate of the second control switch M2 are directly connected to each other, and accordingly, the second control switch M2 is turned off. Because the operation voltage Vd is not applied to the second switch SW2, the second switch SW2 is opened.

Therefore, if the first and second switches SW1 and SW2 are closed while an electric load or charger where an electrical short occurs is connected to the first and second pack terminals T1 and T2, the discharge current Idh exceeding a reference value flows through the precharging resistance Rp for more than a reference time, and the protection circuit 150 detects that the discharge current Idh exceeding the reference value flows for more than the reference time and immediately opens the first and second switches SW1 and SW2, and thus, the battery pack 100 may be protected from an overcurrent due to an electrical short.

According to some embodiments of the present disclosure, if pack terminals are connected to an electric load or charger where an electrical short occurs, charging and discharging switches may be directly opened based on magnitude and time of a current flowing through a precharging resistor, and thus, damage to a battery pack may be prevented or reduced.

The certain embodiments illustrated and described herein are illustrative examples and are not intended to limit the scope of embodiments according to the present disclosure in any way. For the sake of brevity, some description of the known electronic components, control systems, software, and other functional aspects of the systems may be omitted. Connections of lines or connection members between components illustrated in the drawings illustrate functional connections and/or physical or circuit connections, and may be implemented in an actual device as a variety of alternative or additional functional connections, physical connections, or circuit connections. Unless specifically stated as "essential", "important", and so on, components are not considered as essential components.

In describing the embodiments (particularly the patent claims), the use of a term "the" and similar instruction terms may refer to both the singular and the plural. If a range is described in the embodiments, the range includes an invention that applies individual values within the range (unless there is a statement to the contrary), which is the same as if each individual value constituting the range is described in the detailed description of the present disclosure. Finally, unless there is an explicit order or statement to the contrary regarding the operations constituting a method according to the present disclosure, the operations may be performed in any suitable order. The present disclosure is not limited by the order of description of the above operations. The use of any examples or illustrative terms (for example, and so on) in the present disclosure is merely to describe aspects of some embodiments of the present disclosure in more detail, and unless limited by the claims, the scope of the embodiments according to the present disclosure is not limited by the examples or illustrative terms. Those skilled in the art will recognize that various modifications, combinations and changes may be made depending on design conditions and factors within the scope of the appended claims or their equivalents.

Aspects of some embodiments are presented herein, and although certain terms are used, the terms are not intended to limit the present disclosure but should be construed as general and descriptive. In some examples, as will be apparent to those skilled in the art at the time of filing the present disclosure, features and/or components described in connection with a certain embodiment may be used alone or in combination with features and/or components described in connection with other embodiments unless specifically stated otherwise. Therefore, the idea of the present disclosure should not be limited to the embodiments described above, and the scope of the patent claims described below as well as all scopes equivalent to or equivalently changed from the scope of the claims, and their equivalents, are within the scope of the idea of the present disclosure.

It should be understood that embodiments described herein should be considered in a descriptive sense only and not for purposes of limitation. Descriptions of features or aspects within each embodiment should typically be considered as available for other similar features or aspects in other embodiments. While one or more embodiments have been described with reference to the figures, it will be understood by those of ordinary skill in the art that various changes in form and details may be made therein without departing from the scope of the present disclosure as defined by the following claims, and their equivalents.

## Claims

1. A battery pack comprising:
first and second pack terminals;
a battery having battery cells;
a first switch and a precharging resistor connected to each other in series between the battery and the first pack terminal;
a second switch connected between the battery and the second pack terminal; and
a protection circuit configured to open at least one of the first switch or the second switch based on a discharging current flowing through the precharging resistor being maintained to be greater than a second reference value for more than a reference time from a point in time based on the discharging current being greater than a first reference value.

2. The battery pack as claimed in claim 1, wherein the protection circuit is further configured to include:
first and second nodes having the precharging resistor therebetween;
first, second, and third resistors connected in series to the first node;
a first switching switch connected in series between the first, second, and third resistors;
a comparator configured to turn the first switching switch on if a voltage across the precharging resistor is greater than a voltage across the first resistor;
a delay capacitor connected in parallel to the third resistor; and
a second switching switch controlled based on a voltage across the third resistor.

3. The battery pack as claimed in claim 2, wherein the comparator has a positive input terminal and a negative input terminal,
the first resistor is connected between the first node and the positive input terminal, and
the negative input terminal is connected to the second node.

4. The battery pack as claimed in claim 2 or claim 3, wherein the first reference value is determined in proportion to a reciprocal number of a sum of a resistance value of the first resistor, a resistance value of the second resistor, and a turn-on resistance value of the first switching switch, and
the second reference value is determined based on the resistance value of the first resistor, the resistance value of the second resistor, a threshold voltage of the second switching switch, and the turn-on resistance value of the first switching switch.

5. The battery pack as claimed in claim 2, claim 3 or claim 4, wherein the reference time is determined based on a resistance value of the third resistor, capacitance of the delay capacitor, and a threshold voltage of the second switching switch, and
the second switching switch is configured to be turned on based on the voltage across the third resistor being greater than the threshold voltage.

6. The battery pack as claimed in any one of claims 2 to 5, wherein at least one of the first switch or the second switch is configured to be opened if the second switching switch is turned on.

7. The battery pack as claimed in any one of claims 2 to 6, wherein at least one of the first switch or the second switch is a relay switch that is configured to be closed based on an operation voltage being applied thereto, and
the battery pack further includes a switch control circuit including a control switch configured to transmit the operation voltage to the relay switch, and
the control switch is configured to be turned off based on the second switching switch being turned on.
